# EUROPÄISCHE PATENTSCHRIFT

(11) **EP 3 483 133 B1**
(45) Veröffentlichungstag und Bekanntmachung des Hinweises auf die Patenterteilung: **15.07.2020**
(21) Anmeldenummer: 17200525.8
(22) Anmeldetag: 08.11.2017
(51) Int. Cl.: C04B 35/10, C04B 35/101, C04B 35/634, C04B 35/638, C04B 35/66, C04B 38/00

(54) **ROHSTOFF ZUR HERSTELLUNG EINES FEUERFESTEN ERZEUGNISSES, EINE VERWENDUNG DIESES ROHSTOFFES SOWIE EIN FEUERFESTES ERZEUGNIS, WELCHES EINEN SOLCHEN ROHSTOFF UMFASST**
RAW MATERIAL FOR THE MANUFACTURE OF A REFRACTORY PRODUCT, A USE OF THIS RAW MATERIAL AND A REFRACTORY PRODUCT, INCORPORATING SUCH A RAW MATERIAL
MATIÈRE PREMIÈRE DESTINÉE À LA FABRICATION D'UN PRODUIT RÉFRACTAIRE, UTILISATION DE LADITE MATIÈRE PREMIÈRE AINSI QUE PRODUIT RÉFRACTAIRE CONSTITUÉ D'UNE TELLE MATIÈRE PREMIÈRE

(43) Veröffentlichungstag der Anmeldung: 15.05.2019
(73) Patentinhaber: Refractory Intellectual Property GmbH & Co. KG, 1100 Wien (AT)
(72) Erfinder: Mühlhäusser, Jürgen, 8700 Leoben (AT); Rana, Raghunath Prasad, 8700 Leoben (AT); Reif, Gerald, 8762 Pölstal (AT); Blajs, Milos, 8605 Kapfenberg (AT)
(74) Vertreter: Berkenbrink, Kai-Oliver

(56) Entgegenhaltungen:
- CN-B- 102 161 591
- LEI XU ET AL.: "Densification and mechanical properties of reaction sintered Al2O3-MgO-CaO refractory", CHARACTERISATION OF MINERALS AND MATERIALS - THE MINERALS, METALS & MATERIALS SOCIETY 2015, 1. Januar 2015 (2015-01-01), Seiten 337-343, XP002776699, China (Northeastern University - Shenyang)
- XU LEI ET AL: "Effects of CaO content on sintering and lightweight of Al2O3-MgO-CaO refractories", MATERIALS RESEARCH INNOVATIONS, SPRINGER, HEIDELBERG, DE , Bd. 19, Nr. sup5 1. Januar 2015 (2015-01-01), Seiten S5-S5, XP009502355, ISSN: 1432-8917, DOI: 10.1179/1432891714Z.0000000001080 Gefunden im Internet: URL:http://www.tandfonline.com/doi/full/10 .1179/1432891714Z.0000000001080 [gefunden am 2015-05-30]
- YAN WEN ET AL: "High-strength, lightweight spinel refractories", AMERICAN CERAMIC SOCIETY BULLETIN, AMERICAN CERAMIC SOCIETY. COLUMBUS, US, Bd. 84, 1. April 2005 (2005-04-01), Seiten 9201-9203, XP009502343, ISSN: 0002-7812

## Beschreibung

Die Erfindung betrifft einen Rohstoff zur Herstellung eines feuerfesten Erzeugnisses, eine Verwendung dieses Rohstoffes sowie ein feuerfestes Erzeugnis, welches einen solchen Rohstoff umfasst.

Feuerfeste Erzeugnisse können aus Rohstoffen hergestellt werden. Solche Rohstoffe können als natürliche Rohstoffe in der Natur vorliegen (beispielsweise Magnesit) oder als synthetische Rohstoffe durch einen technischen Prozess hergestellt werden (beispielsweise Sintermagnesia). Dabei werden die Rohstoffe zur Herstellung des feuerfesten Erzeugnisses zu einem Versatz gemischt zur Verfügung gestellt und anschließend zu einem feuerfesten Erzeugnis weiterverarbeitet. Zur Herstellung von gesinterten feuerfesten Erzeugnissen werden die Rohstoffe des Versatzes derart mit Temperatur beaufschlagt, dass die Rohstoffe des Versatzes miteinander versintern und anschließend ein gesintertes feuerfestes Erzeugnis bilden. Zur Herstellung eines feuerfesten Erzeugnisses in Form eines feuerfesten Betons werden ein Zement und wenigstens ein feuerfester Rohstoff miteinander vermischt, woraufhin man den Zement abbinden lässt, um nach dem Abbinden einen feuerfesten Beton zu erhalten.

Der Begriff "feuerfestes Erzeugnis" im Sinne der Erfindung bezeichnet insbesondere Erzeugnisse mit einer Einsatztemperatur von über 600°C und bevorzugt feuerfeste Werkstoffe gemäß DIN 51060:2000-06, also Werkstoffe mit einem Kegelfallpunkt > SK 17. Die Ermittlung des Kegelfallpunktes kann insbesondere DIN EN 993-12:1997-06 erfolgen.

Für Dämmzwecke bei hohen Temperaturen werden feuerfeste Erzeugnisse mit Dämmeigenschaften benötigt. Solch feuerfeste Erzeugnisse mit Dämmeigenschaften werden unter Verwendung von Rohstoffen mit einer hohen Porosität und einem damit einhergehenden hohen Dämmwert hergestellt. Solche Rohstoffe mit einer hohen Porosität werden auch als Leichtrohstoffe bezeichnet.

Ein typischer Leichtrohstoff ist beispielsweise Leichtschamotte. Bei Leichtschamotte handelt es sich um einen hoch porösen Rohstoff auf Basis von Schamotte (also einem Rohstoff auf Basis der Oxide Al₂O₃ und SiO₂). Allerdings sind die Anwendungstemperaturen von feuerfesten Erzeugnissen, die unter Verwendung von Leichtschamotte hergestellt werden, begrenzt. In der Regel liegen die Anwendungstemperaturen von feuerfesten Erzeugnissen, die unter Verwendung von Leichtschamotte hergestellt werden, unter 1.400°C.

Ein alternativer Leichtrohstoff ist Hohlkugelkorund. Dieser Leichtrohstoff besteht weitgehend aus Korund und weist eine hohe Feuerfestigkeit auf, so dass die Anwendungstemperaturen eines unter Verwendung von Hohlkugelkorund hergestellten feuerfesten Erzeugnisses durch die Anwesenheit von Hohlkugelkorund praktisch nicht beschränkt werden. Allerdings wird Hohlkugelkorund durch das Verblasen einer Korundschmelze hergestellt und ist damit technisch sehr aufwendig, so dass die Herstellung von feuerfesten Erzeugnissen unter Verwendung von Hohlkugelkorund häufig nicht in Frage kommt beziehungsweise wirtschaftlich uninteressant ist.

LEI XU ET AL.: "Densification and mechanical properties ofreaction sintered Al2O3-MgO-CaO refractory", CHARACTERISATION OF MINERALS AND MATERIALS - THE MINERALS, METALS & MATERIALS SOCIETY 2015, 1. Januar 2015 (2015-01-01), Seiten 337-343, offenbaren ein gesintertes Produkt, das je nach Brenntemperatur eine offene Porosität im Bereich von 48 - 54 Vol.-% und folgende chemische Zusammensetzung aufweist: CaO: 4 Masse-%, MgO: 10 Masse-% und Al₂O3: 86 Masse-%. Ein ähnliches Sintererzeugnis wird offenbart in XU LEI ET AL.: "Effects of CaO content on sintering and lightweight of Al2O3-MgO-CaO refractories", MATERIALS RESEARCH INNOVATIONS, SPRINGER, HEIDELBERG, DE; Bd. 19, Nr. sup5 1. Januar 2015 (2015-01-01), Seiten 211-217.

Der vorliegenden Erfindung liegt die Aufgabe zu Grunde, einen Rohstoff zur Verfügung zu stellen, durch den ein feuerfestes Erzeugnis niedriger Dichte herstellbar ist. Insbesondere liegt der Erfindung insoweit die Aufgabe zu Grunde, einen Rohstoff in Form eines Leichtrohstoffs zur Verfügung zu stellen, durch den ein feuerfestes Erzeugnis niedriger Dichte herstellbar ist.

Eine weitere Aufgabe der Erfindung besteht darin, einen solchen Rohstoff zur Verfügung zu stellen, durch den ein feuerfestes Erzeugnis mit einem hohen Dämmwert herstellbar ist.

Eine weitere Aufgabe der Erfindung besteht darin, einen solchen Rohstoff zur Verfügung zu stellen, der die Herstellung eines feuerfesten Erzeugnisses mit gleichzeitig hohen Anwendungstemperaturen, insbesondere auch mit Anwendungstemperaturen über 1.600°C oder auch über 1.650°C erlaubt. Insbesondere liegt der Erfindung die Aufgabe zu Grunde einen solchen Rohstoff zur Verfügung zu stellen, der bei 1.600°C oder auch bei 1.650°C keine Schmelzphasen bildet.

Eine weitere Aufgabe der Erfindung besteht darin, einen solchen Rohstoff zur Verfügung zu stellen, der technisch einfach herstellbar ist, insbesondere technisch einfacher als die Herstellung von Hohlkugelkorund.

Eine weitere Aufgabe der Erfindung besteht darin, ein feuerfestes Erzeugnis zur Verfügung zu stellen, das einen solchen Rohstoff umfasst.

Zur Lösung dieser Aufgaben wird erfindungsgemäß zur Verfügung gestellt ein Rohstoff zur Herstellung eines feuerfesten Erzeugnisses, der die folgenden Merkmale umfasst:
Der Rohstoff weist eine chemische Zusammensetzung auf, nach welcher die folgenden Oxide jeweils in den folgenden Anteilen vorliegen:

| | |
|---|---|
| Al₂O₃: | 83 bis 93 Masse-%, |
| MgO: | 4 bis 9 Masse-%, |
| CaO: | 2 bis 10 Masse-%; |

der Rohstoff weist eine offene Porosität im Bereich von 30 bis 60 Volumen-% auf.

Überraschend wurde erfindungsgemäß festgestellt, dass durch einen Rohstoff, der eine solch chemische Zusammensetzung und eine solch offene Porosität aufweist, die vorstehenden Aufgaben gelöst werden können.

So kann durch einen solch erfindungsgemäßen Rohstoff, der auf Grund seiner hohen offenen Porosität und seiner damit einhergehenden niedrigen Dichte auch als Leichtrohstoff bezeichnet werden kann, ein feuerfestes Erzeugnis niedriger Dichte und mit einem hohen Dämmwert hergestellt werden. Insbesondere wurde im Rahmen der Erfindung auch festgestellt, dass ein unter Verwendung des erfindungsgemäßen Rohstoffes hergestelltes feuerfestes Erzeugnis Anwendungstemperaturen über 1.600°C, und teilweise auch über 1.650°C erlaubt. Ferner kann der erfindungsgemäße Rohstoff derart zur Verfügung gestellt werden, dass dieser bei 1.600° oder auch bei 1.650°C keine Schmelzphasen bildet. Insbesondere kann der erfindungsgemäße Rohstoff jedoch auch mit besonders niedrigem technischem Aufwand hergestellt werden. Ferner kann der erfindungsgemäße Rohstoff auch unter geringem wirtschaftlichem Aufwand, insbesondere auch aus günstigen Rohstoffen durch technisch einfache Verfahren hergestellt werden.

Der erfindungsgemäße Rohstoff weist eine chemische Zusammensetzung auf, wonach Al₂O₃ in einem Anteil im Bereich von 83 bis 93 Masse-% vorliegt. Gemäß einer noch bevorzugteren Ausführungsform weist der Rohstoff eine chemische Zusammensetzung auf, wonach Al₂O₃ in einem Anteil im Bereich von 85 bis 90 Masse-% vorliegt.

Der erfindungsgemäße Rohstoff weist ferner eine chemische Zusammensetzung auf, wonach MgO in einem Anteil im Bereich von 4 bis 9 Masse-% vorliegt.

Der erfindungsgemäße Rohstoff weist ferner eine chemische Zusammensetzung auf, wonach CaO in einem Anteil im Bereich von 2 bis 10 Masse-% vorliegt. Gemäß einer noch bevorzugteren Ausführungsform weist der Rohstoff eine chemische Zusammensetzung auf, wonach CaO in einem Anteil im Bereich von 5 bis 8 Masse-% vorliegt.

Die hierin gemachten Angaben zu Massenanteilen an Oxiden im erfindungsgemäßen Rohstoff sind jeweils bezogen auf die Gesamtmasse des Rohstoffes, also auf die Gesamtmasse der Substanzen gemäß der chemischen Zusammensetzung des erfindungsgemäßen Rohstoffes.

Die chemische Zusammensetzung des Rohstoffes wird mittels Röntgenfluoreszenzanalyse (RFA) bestimmt gemäß DIN EN ISO 12677:2013-02.

Erfindungsgemäß wurde festgestellt, dass sich die Eigenschaften des erfindungsgemäßen Rohstoffes, insbesondere seine hohe Feuerfestigkeit, verschlechtern können, wenn der Rohstoff neben den Oxiden Al₂O₃, MgO und CaO Anteile an weiteren Substanzen aufweist.

Nach einer bevorzugten Ausführungsform ist insoweit vorgesehen, dass der erfindungsgemäße Rohstoff eine chemische Zusammensetzung aufweist, wonach die Oxide Al₂O₃, MgO und CaO in einem Gesamtanteil von wenigstens 98 Masse-% vorliegen, noch bevorzugter in einem Gesamtanteil von wenigstens 99 Masse-%, jeweils bezogen auf die Gesamtmasse der Substanzen der chemischen Zusammensetzung des erfindungsgemäßen Rohstoffes.

Entsprechend kann vorgesehen sein, dass der erfindungsgemäße Rohstoff eine chemische Zusammensetzung aufweist, wonach neben den Oxiden Al₂O₃, MgO und CaO weitere Substanzen in einem Anteil unter 2 Masse-% vorliegen, insbesondere in einem Anteil unter 1 Masse-%.

Erfindungsgemäß wurde festgestellt, dass insbesondere durch die Anwesenheit der Oxide SiO₂ und Fe₂O₃ im erfindungsgemäßen Rohstoff die Eigenschaften des Rohstoffes, insbesondere seine feuerfesten Eigenschaften, verschlechtert werden können.

Nach einer Ausführungsform ist daher vorgesehen, dass der erfindungsgemäße Rohstoff eine chemische Zusammensetzung mit einem Anteil an SiO₂ unter 0,5 Masse-% aufweist, noch bevorzugter in einem Anteil unter 0,3 Masse-%.

Nach einer Ausführungsform ist daher vorgesehen, dass der erfindungsgemäße Rohstoff eine chemische Zusammensetzung mit einem Anteil an Fe₂O₃ unter 0,5 Masse-% aufweist, noch bevorzugter in einem Anteil unter 0,3 Masse-%.

Da die Feuerfestigkeit des erfindungsgemäßen Rohstoffes insbesondere auch durch die Anwesenheit von Alkali-Oxiden negativ beeinträchtigt werden kann, ist nach einer Ausführungsform vorgesehen, dass der erfindungsgemäße Rohstoff eine chemische Zusammensetzung mit einem Anteil an Na₂O unter 0,5 Masse-%, noch bevorzugter unter 0,2 Masse-% aufweist. Nach einer Fortbildung dieses Erfindungsgedankens ist vorgesehen, dass der erfindungsgemäße Rohstoff eine chemische Zusammensetzung mit einem Gesamtanteil an Alkali-Oxiden (insbesondere Na₂O, K₂O und Li₂O) unter 0,5 Masse-%, und noch bevorzugter unter 0,2 Masse-% aufweist.

Der erfindungsgemäße Rohstoff weist eine offene Porosität im Bereich von 30 bis 60 Vol.-% auf. Auf Grund einer solch hohen offenen Porosität weist der erfindungsgemäße Rohstoff nur eine geringe Wärmeleitfähigkeit auf, so dass durch die Verwendung des erfindungsgemäßen Rohstoffes zur Herstellung eines feuerfesten Erzeugnisses die Dämmeigenschaften des feuerfesten Erzeugnisses verbessert werden können.

Insoweit wurde erfindungsgemäß festgestellt, dass bei einer offenen Porosität des erfindungsgemäßen Rohstoffes unter 30 Vol.-% der Dämmwert des feuerfesten Erzeugnisses teilweise nur ungenügend verbessert wird und bei einer offenen Porosität über 60 Vol.-% die Festigkeit des feuerfesten Erzeugnisses verschlechtert werden kann. Insoweit hat sich eine offene Porosität des erfindungsgemäßen Rohstoffes im Bereich von 30 bis 60 Vol.-% als besonders vorteilhaft herausgestellt. Besonders bevorzugt weist der erfindungsgemäße Rohstoff eine offene Porosität im Bereich von 35 bis 55 Vol.-% auf. Die offene Porosität ist bestimmt gemäß DIN 66133:1993-06.

Der erfindungsgemäße Rohstoff weist bevorzugt eine Rohdichte im Bereich von 1,60 bis 2,50 g/cm³ auf, noch bevorzugter eine Rohdichte im Bereich von 1,66 bis 2,30g/cm³. Die Rohdichte ist bestimmt gemäß DIN EN 993-1:1995-04.

Bevorzugt weist der erfindungsgemäße Rohstoff ein Schüttgewicht (beziehungsweise eine Schüttdichte) im Bereich von 600 bis 1.000g/l auf. Das Schüttgewicht ist bestimmt gemäß DIN EN ISO 60:2000-01.

Als sehr vorteilhaft hat es sich im Rahmen der Erfindung herausgestellt, wenn der erfindungsgemäße Rohstoff eine äußert geringe Porengröße aufweist. Insbesondere wurde festgestellt, dass der erfindungsgemäße Rohstoff bei einer weitgehend geringen Porengröße eine hohe offene Porosität bei einer gleichzeitig hohen Festigkeit aufweisen kann. Bevorzugt ist vorgesehen, dass der erfindungsgemäße Rohstoff eine Porengrößenverteilung aufweist, wonach wenigstens 90 Vol.-% des Porenvolumens der offenen Poren aus Poren mit einer Porengröße unter 50 µm gebildet sind.

Die Porengrößenverteilung wird mittels Quecksilberdruckporosimetrie bestimmt gemäß DIN 66133:1993-06.

Bevorzugt weist der Rohstoff die mineralogische Phase Ca₂Mg₂Al₂₈O₄₆ auf. Diese Phase ist charakteristisch für den erfindungsgemäßen Rohstoff, und sie wird bei der Herstellung des erfindungsgemäßen Rohstoffes regelmäßig erhalten, soweit dieser die erfindungsgemäße chemische Zusammensetzung aufweist. Die Phase Ca₂Mg₂Al₂₈O₄₆, die sich als chemische Formel beziehungsweise in ihrer Oxidform auch als 2CaO · 2MgO · 14Al₂O₃ schreiben lässt, weist der erfindungsgemäße Rohstoff bevorzugt in einem Anteil im Bereich von 20 bis 50 Masse-% und besonders bevorzugt in einem Anteil im Bereich von 30 bis 50 Masse-% auf, bezogen auf die Gesamtmasse des Rohstoffes.

Bevorzugt weist der erfindungsgemäße Rohstoff die mineralogische Phase CaMg₂Al₁₆O₂₇ auf. Diese Phase ist ebenfalls charakteristisch für den erfindungsgemäßen Rohstoff, wobei der Rohstoff diese Phase regelmäßig aufweist, wenn er die erfindungsgemäße chemische Zusammensetzung aufweist. Diese Phase, die sich als chemische Formel beziehungsweise in ihrer Oxidform auch als CaO · 2MgO · 8Al₂O₃ schreiben lässt, weist der erfindungsgemäße Rohstoff bevorzugt in einem Anteil im Bereich von 20 bis 50 Masse-% und besonders bevorzugt in einem Anteil im Bereich von 30 bis 50 Masse-% auf, bezogen auf die Gesamtmasse des Rohstoffes.

Bevorzugt kann der erfindungsgemäße Rohstoff die mineralogische Phase CaAl₄O₇ (Grossit) aufweisen. Diese Phase, die sich als chemische Formel beziehungsweise in ihrer Oxidform auch als CaO · 2Al₂O₃ schreiben lässt, weist der erfindungsgemäße Rohstoff bevorzugt in einem Anteil im Bereich von 1 bis 9 Masse-% und besonders bevorzugt in einem Anteil im Bereich von 3 bis 7 Masse-% auf, bezogen auf die Gesamtmasse des Rohstoffes.

Bevorzugt kann der erfindungsgemäße Rohstoff die mineralogische Phase CaAl₁₂O₁₉ (Hibonit) aufweisen. Diese Phase, die sich als chemische Formel beziehungsweise in ihrer Oxidform auch als CaO · 6Al₂O₃ schreiben lässt, weist der erfindungsgemäße Rohstoff bevorzugt in einem Anteil im Bereich von 1 bis 9 Masse-% und besonders bevorzugt in einem Anteil im Bereich von 3 bis 7 Masse-% auf, bezogen auf die Gesamtmasse des Rohstoffes.

Der erfindungsgemäße Rohstoff kann insbesondere die mineralogische Phase Spinell (MgAl₂O₄; MgO · Al₂O₃), die auch als "echter" Spinell beziehungsweise Magnesia-Spinell bezeichnet wird, trotz der Anteile an Al₂O₃ und MgO, nur in einem verhältnismäßig geringen Anteil aufweisen. Bevorzugt ist vorgesehen, dass der erfindungsgemäße Rohstoff Spinell in einem Anteil unter 8 Masse-%, noch bevorzugter in einem Anteil unter 5 Masse-%. Es kann jedoch vorgesehen sein, dass der Rohstoff die Phase Spinell in einem Anteil von wenigstens 1 Masse-% aufweist. Die vorgemachten Angaben in Masse-% sind jeweils bezogen auf die Gesamtmasse des Rohstoffes.

Erfindungsgemäß wurde festgestellt, dass sich die Eigenschaften des erfindungsgemäßen Rohstoffes, insbesondere seine hohe Feuerfestigkeit, verschlechtern können, wenn der Rohstoff neben den vorbezeichneten, mineralogischen Phasen Ca₂Mg₂Al₂₈O₄₆, CaMg₂Al₁₆O₂₇, Grossit, Hibonit und Spinell Anteile an weiteren Phasen aufweist. Nach einer bevorzugten Ausführungsform ist daher vorgesehen, dass der erfindungsgemäße Rohstoff eine Gesamtmasse an diesen mineralogischen von wenigstens 97 Masse-% aufweist, noch bevorzugter von wenigstens 99 Masse-%, jeweils bezogen auf die Gesamtmasse des erfindungsgemäßen Rohstoffes.

Entsprechend kann vorgesehen sein, dass der erfindungsgemäße Rohstoff neben den vorbezeichneten, mineralogischen Phasen Ca₂Mg₂Al₂₈O₄₆, CaMg₂Al₁₆O₂₇, Grossit, Hibonit und Spinell Anteile an weiteren Phasen in einem Anteil unter 3 Masse-% aufweist, noch bevorzugter in einem Anteil unter 1 Masse-%.

Art und Anteil der mineralogischen Phasen im erfindungsgemäßen Rohstoff sind mittels Röntgendiffraktometrie gemäß DIN EN 13925-1:2003-07 bestimmt.

Gegenstand der Erfindung ist auch die Verwendung des hierin offenbarten, erfindungsgemäßen Rohstoffs zur Herstellung eines feuerfesten Erzeugnisses.

Diese Verwendung erfolgt bevorzugt mit der Maßgabe, dass der erfindungsgemäße Rohstoff mit weiteren Rohstoffen gemischt und zu einem feuerfesten Erzeugnis weiterverarbeitet wird.

Nach einer Ausführungsform wird der Rohstoff zur Herstellung eines gesinterten feuerfesten Erzeugnisses, also eines gesinterten feuerfesten keramischen Erzeugnisses verwendet. Bevorzugt erfolgt diese Verwendung des erfindungsgemäßen Rohstoffes mit der Maßgabe, dass der Rohstoff mit weiteren Rohstoffen gemischt und anschließend zu einem gesinterten, feuerfesten Erzeugnis gebrannt wird beziehungsweise einem Sinterbrand unterworfen wird. Nach dem Mischen und vor dem Brand kann die Mischung aus dem erfindungsgemäßen Rohstoff mit den weiteren Rohstoffen, also der insoweit erstellte Versatz, geformt werden, beispielsweise durch Pressen. Insoweit kann der Versatz beispielsweise zu einem ungebrannten Formkörper, einem sogenannten Grünkörper, gepresst werden. Dieser Grünkörper kann anschließend, wie zuvor ausgeführt, einem Sinterbrand unterworfen werden.

Nach einer besonders bevorzugten Ausführungsform wird der Rohstoff zur Herstellung eines zementgebundenen feuerfesten Erzeugnisses, also eines feuerfesten Betons verwendet. Bevorzugt erfolgt diese Verwendung des erfindungsgemäßen Rohstoffes mit der Maßgabe, dass der Rohstoff mit einem Zement und gegebenenfalls Wasser gemischt wird und man den Zement anschließend abbinden lässt. Nach dem Abbinden des Zements erhält man einen feuerfesten Beton. Bevorzugt wird der Rohstoff mit einem hydraulisch abbindenden Zement, besonders bevorzugt mit einem Calzium-Aluminat-Zement gemischt.

Gegenstand der Erfindung ist auch ein feuerfestes Erzeugnis, welches einen erfindungsgemäßen Rohstoff umfasst. Bevorzugt liegt ein solches feuerfestes Erzeugnis, wie zuvor ausgeführt, in Form eines feuerfesten Betons vor.

Bevorzugt umfasst ein solcher feuerfester Beton einen Calzium-Aluminat-Zement und einen erfindungsgemäßen Rohstoff.

Ein unter Verwendung des erfindungsgemäßen Rohstoffes hergestelltes, feuerfestes Erzeugnis kann den erfindungsgemäßen Rohstoff in einem Anteil entsprechend den Anwendungsbedingungen des feuerfesten Erzeugnisses aufweisen. Mit steigendem Anteil des erfindungsgemäßen Rohstoffes in dem feuerfesten Erzeugnis steigen dabei die Dämmeigenschaften des Erzeugnisses. Gleichzeitig kann mit steigendem Anteil des erfindungsgemäßen Rohstoffs in dem feuerfesten Erzeugnis jedoch auch dessen Festigkeit, insbesondere dessen Druckfestigkeit sinken. Im Rahmen der Erfindung hat sich ein Anteil des erfindungsgemäßen Rohstoffes in einem feuerfesten Erzeugnis im Bereich von 10 bis 90 Masse-%, besonders bevorzugt im Bereich von 20 bis 80 Masse-%, jeweils bezogen auf die Gesamtmasse des Erzeugnisses, als vorteilhaft herausgestellt, so dass ein unter Verwendung des erfindungsgemäßen Rohstoffs hergestelltes Erzeugnis den erfindungsgemäßen Rohstoff bevorzugt in einem solchen Anteil aufweisen kann.

Ein solches, unter Verwendung des erfindungsgemäßen Rohstoffes hergestelltes, erfindungsgemäßes feuerfestes Erzeugnis kann grundsätzlich als feuerfestes Dämmmaterial für beliebige Anwendungen verwendet werden. Insbesondere kann das erfindungsgemäße feuerfeste Erzeugnis als ungeformtes feuerfestes Erzeugnis verwendet werden, also als sogenannte "Isoliermasse" beziehungsweise "Dämmmasse", insbesondere, wie zuvor ausgeführt, als feuerfester Beton. Erfindungsgemäß hat sich herausgestellt, dass das erfindungsgemäße Erzeugnis besonders vorteilhaft für feuerfeste, insbesondere für hochfeuerfeste Isolieranwendungen in Aggregaten der chemischen und petrochemischen Industrie verwendet werden kann. In solchen Aggregaten werden regelmäßig hochreine feuerfeste Erzeugnisse benötigt, um die in den Aggregaten behandelten Stoffe nicht durch Verunreinigungen beziehungsweise Nebenbestandteile der feuerfesten Dämmmaterialien zu verunreinigen. Insbesondere Verunreinigungen in Form von Eisenoxiden sind dabei regelmäßig unerwünscht. Insbesondere auch, da der erfindungsgemäße Rohstoff, wie zuvor ausgeführt, mit äußerst geringen Anteilen an Fe₂O₃ zur Verfügung gestellt werden kann, eignet sich das auf Basis des erfindungsgemäßen Rohstoffes hergestellte erfindungsgemäße Erzeugnis besonders vorteilhaft für solch hochfeuerfeste Isolieranwendungen in Aggregaten der chemischen und petrochemischen Industrie. Besonders vorteilhaft kann das erfindungsgemäße Erzeugnis zur Isolierung von Aggregaten der chemischen und petrochemischen in Form von Schwefelrückgewinnungsanlagen (insbesondere in Form von sogenannten Claus-Brennkammern und Claus-Reaktoren bei Claus-Verfahren) sowie in Form von Sekundärreformern (bei der Ammoniaksynthese) verwendet werden. Gegenstand der Erfindung sind auch die vorbezeichneten, mit dem erfindungsgemäßen Erzeugnis isolierten Aggregate.

Der erfindungsgemäße Rohstoff liegt in Form eines synthetischen Rohstoffes vor, also in Form eines Rohstoffes, der nicht natürlich vorliegt, sondern als das Ergebnis eines technischen Prozesses. Bevorzugt liegt der erfindungsgemäße Rohstoff als Sintererzeugnis vor, also als Erzeugnis aus miteinander versinterten Partikeln beziehungsweise Rohstoffen.

Zur Herstellung des erfindungsgemäßen Rohstoffes kann bevorzugt ein Versatz aus mehreren Rohstoffen derart mit Temperatur beaufschlagt beziehungsweise einem Brand (Sinterbrand) unterworfen werden, dass diese Rohstoffe miteinander versintern und den erfindungsgemäßen Rohstoff bilden. Die Rohstoffe liegen dabei derart in einem solchen Versatz vor, dass nach dem Sinterbrand ein Erzeugnis mit der chemischen Zusammensetzung des erfindungsgemäßen Rohstoffes vorliegt.

Zur Herstellung der hohen offenen Porosität des erfindungsgemäßen Rohstoffes kann bevorzugt wenigstens einer der wenigen folgenden, aus dem Stand der Technik bekannten Prozesse zur Erzeugung von Porosität in einem Rohstoff angewandt werden: Ein Ausbrandprozess oder ein Gasbildungsprozess.

Bei einem Ausbrandprozess weist der Versatz zur Herstellung des erfindungsgemäßen Rohstoffes wenigstens einen Rohstoff auf, der während der Herstellung des erfindungsgemäßen Rohstoffes ausbrennt. Dieser Ausbrand kann insbesondere bei einem Sinterbrand zur Herstellung des erfindungsgemäßen Rohstoffs erfolgen. Das Prinzip der Erzeugung von Porosität bei einem solchen Ausbrand besteht darin, dass der von dem ausbrennenden Rohstoff eingenommene Raum nach dem Ausbrand einen Hohlraum hinterlässt, der als Porenvolumen vorliegt.

Bei einem Gasbildungsprozess umfasst der Versatz zur Herstellung des erfindungsgemäßen Rohstoffes wenigstens einen Rohstoff, der während der Herstellung des erfindungsgemäßen Rohstoffes Gas bildet. Dieses Gas erzeugt Hohlräume, die anschließend als Poren im hergestellten Rohstoff vorliegen.

Der für die Herstellung des erfindungsgemäßen Rohstoffes verwendete Versatz umfasst mineralische Rohstoffe, die die Oxide Al₂O₃, MgO und CaO umfassen. Da der erfindungsgemäße Rohstoff bevorzugt überwiegend oder auch praktisch ausschließlich aus den Oxiden Al₂O₃, MgO und CaO besteht, werden zur Herstellung des erfindungsgemäßen Rohstoffes bevorzugt möglichst reine Rohstoffe, also Rohstoffe mit einem möglichst geringen Anteil an Nebenbestandteilen verwendet.

Um den Anteil an Al₂O₃ im erfindungsgemäßen Rohstoff zur Verfügung zu stellen, wird in dem zur Herstellung des erfindungsgemäßen Rohstoffs verwendeten Versatz ein Rohstoff auf Basis Al₂O₃ verwendet, bevorzugt wenigstens einer der folgenden Rohstoffe: Sinterkorund, Schmelzkorund oder kalzinierte Tonerde. Bevorzugt wird kalzinierte Tonerde eingesetzt. Besonders bevorzugt wird hochreine kalzinierte Tonerde eingesetzt, bevorzugt mit einem Anteil von wenigstens 98 Masse-% Al₂O₃, noch bevorzugter von wenigstens 99 Masse-% Al₂O₃, bezogen auf die Gesamtmasse der kalzinierten Tonerde.

Um den Anteil an CaO im erfindungsgemäßen Rohstoff zur Verfügung zu stellen, wird zur Herstellung des erfindungsgemäßen Rohstoffes bevorzugt wenigstens einer der folgenden Rohstoffe eingesetzt: Kalkstein (CaCO₃) oder Dolomit (CaCO₃·MgCO₃). Die Verwendung von Kalkstein oder Dolomit in dem Versatz zur Herstellung des erfindungsgemäßen Rohstoffes hat insbesondere auch den Vorteil, dass diese Rohstoffe während des Sinterbrandes kalzinieren und das dabei entstehende, gasförmige CO₂ eine Porosität im Rohstoff erzeugt. Insoweit handelt es sich hierbei um eine wie vorstehend ausgeführte Gasbildung, durch die die hohe offene Porosität im erfindungsgemäßen Rohstoff erzeugt werden kann. Bevorzugt werden Kalkstein und Dolomit einer rohen Reinheit verwendet. Bevorzugt wird ein Kalkstein verwendet, der (nach seiner Kalzinierung, also ohne das abgespaltete CO₂) einen Anteil an CaO von wenigstens 98 Masse-%, noch bevorzugter von wenigstens 99 Masse-% aufweist, bezogen auf die Gesamtmasse an Kalkstein. Entsprechend kann bevorzugt ein Dolomit vorgesehen sein, der (wiederum nach seiner Kalzinierung) eine Gesamtmasse an CaO und MgO von wenigstens 95 Masse-%, noch bevorzugter von wenigstens 97 Masse-%, bezogen auf die Gesamtmasse an Dolomit, aufweist. Besonders bevorzugt weist der Versatz zur Herstellung des erfindungsgemäßen Rohstoffes Kalkstein auf, um den Anteil an CaO im erfindungsgemäßen Rohstoff zur Verfügung zu stellen.

Um den Anteil an MgO im erfindungsgemäßen Rohstoff zur Verfügung zu stellen, weist der zur Herstellung des erfindungsgemäßen Rohstoffs verwendete Versatz bevorzugt wenigstens einen der folgenden Rohstoffe auf: Magnesia oder Dolomit. Der Dolomit kann dabei, wie zuvor ausgeführt, gleichzeitig zur Gasbildung beitragen und im Übrigen wie vorstehend ausgebildet sein. Magnesia (MgO) kann bevorzugt in Form wenigstens eines der folgenden Rohstoffe im Versatz vorliegen: Schmelzmagnesia, Sintermagnesia oder Magnesiakauster. Besonders bevorzugt wird wiederum eine Magnesia mit einer hohen Reinheit verwendet, insbesondere bevorzugt mit einem Anteil an MgO von wenigstens 97 Masse-%, noch bevorzugter von wenigstens 98 Masse-%, bezogen auf die Gesamtmasse des Rohstoffes.

Besonders bevorzugt wird im Versatz zur Herstellung des erfindungsgemäßen Rohstoffes Magnesiakauster verwendet, um den Anteil an MgO im erfindungsgemäßen Rohstoff zur Verfügung zu stellen.

Besonders bevorzugt weist der Versatz zur Herstellung des erfindungsgemäßen Rohstoffs die drei mineralischen Rohstoffe kalzinierte Tonerde, Kalkstein und Magnesiakauster auf. Dabei kann der Versatz bevorzugt einen Anteil an kalzinierter Tonerde im Bereich von 80 bis 88 Masse-%, einen Anteil an Kalkstein im Bereich von 8 bis 15 Masse-% und einen Anteil an Magnesiakauster im Bereich von 2 bis 8 Masse-% aufweisen, jeweils bezogen auf die Gesamtmasse der mineralischen Rohstoffe im Versatz (also insbesondere ohne Berücksichtigung organischer Bestandteile, temporärer Bindemittel und ausbrennbarer Bestandteile, wie nachfolgend beschrieben).

Neben den vorbezeichneten, mineralischen Rohstoffen weist der Versatz zur Herstellung des erfindungsgemäßen Rohstoffes bevorzugt wenigstens einen der folgenden Rohstoffe auf: Einen ausbrennbaren Rohstoff oder einen Rohstoff, der während der Herstellung des erfindungsgemäßen Rohstoffes Gas bildet.

Bei einem solch ausbrennbaren Rohstoff im Versatz kann es sich, wie zuvor ausgeführt, um einen Rohstoff handeln, durch den mittels seines Ausbrandes während des Herstellungsverfahrens Porosität im Rohstoff erzeugt wird. Bevorzugt kann es sich um wenigstens einen organischen ausbrennbaren Rohstoff handeln, besonders bevorzugt um wenigstens einen der folgenden Rohstoffe: Holzstaub, Holzmehl, Holzspäne, Methylzellulose, Ruß, Zellulose, Dextrin oder Kokosschalenmehl. Bevorzugt liegt die Gesamtmasse dieser ausbrennbaren Rohstoffe in einem Anteil im Bereich von 1 bis 30 Masse-%, besonders bevorzugt eine einem Anteil von 1 bis 10 Masse-% vor, bezogen auf die Gesamtmasse aus mineralischen Rohstoffen und diesen ausbrennbaren Komponenten im Versatz.

Zur Herstellung der Porosität durch Gasbildung kann der Versatz, wie zuvor ausgeführt, insbesondere einen während des Sinterbrandes kalzinierenden Rohstoff aufweisen, so dass durch die Kalzinierung gasförmiges Kohlenstoffdioxid (CO₂) gebildet wird. Besonders bevorzugt liegt ein solch Gas bildender Rohstoff, wie zuvor ausgeführt, in Form von Kalkstein vor. Ein solcher Rohstoff in Form von Kalkstein hat insbesondere auch den Vorteil, dass er zum einen eine Rohstoffquelle für den Anteil an CaO im erfindungsgemäßen Rohstoff und zum anderen gleichzeitig eine Quelle für die Erzeugung von gasförmigen CO₂ während des Brandes des Versatzes zum erfindungsgemäßen Rohstoff darstellt.

Besonders bevorzugt liegt der Versatz zur Herstellung des erfindungsgemäßen Rohstoffes sehr feinkörnig, also in einer sehr geringen Korngröße vor. Nach einer besonders bevorzugten Ausführungsform weist die Korngröße des Versatzes einen Wert d₉₀ unter 50µm auf. Insoweit liegt der Versatz zur Herstellung des erfindungsgemäßen Rohstoffes bevorzugt zu wenigstens 90 Masse-%, bezogen auf die Gesamtmasse des Versatzes, in einer Korngröße unter 50µm vor. Die Korngröße wird mittels Laserbeugung bestimmt gemäß ISO 13320:2009-10.

Neben den vorbezeichneten mineralischen Rohstoffen und den ausbrennbaren Rohstoffen umfasst der Versatz zur Herstellung des erfindungsgemäßen Rohstoffes bevorzugt noch ein Bindemittel, bevorzugt ein temporäres Bindemittel, also ein Bindemittel, das während des Sinterbrandes ausbrennt.

Bevorzugt umfasst der Versatz ein solch temporäres Bindemittel in Form eines organischen Bindemittels. Nach einer Ausführungsform umfasst der Versatz ein wässriges organisches Bindemittel, also ein Bindemittel in Form einer in Wasser gelösten organischen Substanz. Nach einer besonders bevorzugten Ausführungsform umfasst der Versatz ein Bindemittel in Form von in Wasser gelöstem Polyvinylalkohol. Der Versatz kann das Bindemittel bevorzugt in einem Anteil im Bereich von 1,5 bis 5 Masse-%, besonders bevorzugt in einem Anteil von etwa 3 Masse-% aufweisen, jeweils bezogen auf den Versatz ohne das Bindemittel.

Der, insbesondere mit einem Bindemittel angemachte, Versatz kann bevorzugt in einem Mischer gemischt werden. Nach einer Ausführungsform wird der gemischte Versatz anschließend zu Formstücken geformt, beispielsweise durch Pressen. Nach einer besonders bevorzugten Ausführungsform wird der gemischte Versatz jedoch entweder während des Mischens oder in einem dem Mischen nachgeschalteten Granulierprozess zu Granalien granuliert. Solche Granalien weisen bevorzugt eine mittlere Korngröße im Bereich von 1 bis 5mm auf.

Der gemischte und danach entweder zu Formstücken gepresste oder granulierte Versatz wird anschließend einem Sinterbrand unterworfen. Vor dem Sinterbrand kann der - gepresste oder granulierte Versatz - getrocknet werden, beispielsweise in einem Trockenaggregat. Bevorzugt wird der Versatz einem Sinterbrand bei einer Temperatur im Bereich von 1.600°C bis 1.650°C unterworfen, bevorzugt für eine Dauer von etwa 1 Stunde. Während des Sinterbrandes brennen die organischen Rohstoffe des Versatzes aus und kalzinierbare, mineralische Komponenten des Versatzes, insbesondere Kalkstein, kalzinieren unter Abgabe vom gasförmigen CO₂. Durch diesen Ausbrand und diese Gasbildung wird während des Sinterbrandes Porosität erzeugt, so dass nach dem Abkühlen des gebrannten Versatzes ein erfindungsgemäßer Rohstoff in Form eines gesinterten Erzeugnisses mit einer erfindungsgemäß hohen Porosität vorliegt.

Alternativ zur vorbeschriebenen Herstellung des erfindungsgemäßen Rohstoffes durch einen Sinterbrand kann der erfindungsgemäße Rohstoff auch durch das Verblasen einer Schmelze zu Hohlkugeln hergestellt werden, entsprechend der zur Herstellung der Hohlkugelkorund bekannten Technologie. In diesem Fall wird bevorzugt ein Versatz aus mehreren Rohstoffen, deren chemische Gesamtzusammensetzung der chemischen Zusammensetzung des erfindungsgemäßen Rohstoffes entspricht, zu einer Schmelze erschmolzen und diese Schmelze anschließend zu Hohlkugeln verblasen. Allerdings ist diese Technologie weniger bevorzugt als die Herstellung des erfindungsgemäßen Rohstoffes durch einen Sinterbrand, da die Herstellung von Hohlkugeln technisch sehr aufwendig und auf Grund des hohen Energieeinsatzes ferner wirtschaftlich weniger interessant ist.

Weitere Merkmale der Erfindung ergeben sich aus den Ansprüchen und dem nachfolgend beschriebenen Ausführungsbeispiel.

Sämtliche Merkmale der Erfindung können, einzeln oder in Kombination, beliebig miteinander kombiniert sein.

In dem nachfolgenden Ausführungsbeispiel werden ein Verfahren zur Herstellung eines Ausführungsbeispiels eines erfindungsgemäßen Rohstoffes sowie der danach erhaltene Rohstoff beschrieben.

Zur Herstellung des Ausführungsbeispiels eines erfindungsgemäßen Rohstoffes wurde zunächst ein Versatz zur Verfügung gestellt.

Der Versatz umfasste die folgenden Anteile an mineralischen Rohstoffen, bezogen auf die Gesamtmasse dieser mineralischen Rohstoffe:

| | |
|---|---|
| kalzinierte Tonerde: | 87 Masse-% |
| Kalkstein: | 13 Masse-% |
| Magnesiakauster: | 5 Masse-% |

Die kalzinierte Tonerde wies einen Anteil an Al₂O₃ von 99,7 Masse-% und einen Anteil an Na₂O von etwa 0,3 Masse-% auf, jeweils bezogen auf die Gesamtmasse der kalzinierten Tonerde.

Der Kalkstein wies einen Anteil an CaO von 98,4 Masse-%, an SiO₂ von 1,0 Masse-%, an Al₂O₃ von 0,4 Masse-% und an Fe₂O₃ von 0,2 Masse-% auf, jeweils bezogen auf die Gesamtmasse des kalzinierten Kalksteins.

Der Magnesiakauster wies einen Anteil an MgO von 98 Masse-%, an CaO von 1,6 Masse-%, an SiO₂ von 0,3 Masse-% und an Fe₂O₃ von 0,1 Masse-% auf, jeweils bezogen auf die Gesamtmasse des Magnesiakausters.

Diese mineralischen Rohstoffe wurden miteinander vermischt und auf eine Korngröße d₉₀ unter 50µm gemahlen.

Diese fein aufgemahlene Mischung der mineralischen Rohstoffe wurde anschließend mit 5 Masse-% Holzstaub, bezogen auf die Gesamtmasse aus mineralischen Rohstoffen und Holzstaub gemischt. Ferner wurde dieser Versatz aus mineralischen Rohstoffen und Holzstaub mit 30 Masse-% eines temporären, flüssigen Bindemittels gemischt, bezogen auf die Gesamtmasse aus mineralischen Rohstoffen und Holzstaub ohne das temporäre Bindemittel. Das temporäre Bindemittel war gebildet aus 93 Masse-% Wasser und 7 Masse-% Polyvinylalkohol, bezogen auf die Gesamtmasse des Bindemittels. Dieser Versatz aus mineralischen Rohstoffen, Holzstaub und temporärem Bindemittel wurde in einem Mischer gemischt und anschließend zu Granalien mit einer mittleren Korngröße im Bereich von 1 bis 5 mm granuliert. Anschließend wurden diese Granalien für eine Stunde bei einer Temperatur von 1.600°C in einem Ofen gebrannt. Dabei verflüchtigte sich das temporäre Bindemittel. Der Holzstaub brannte vollständig aus und lies eine hohe Porosität zurück, die während des weiteren Sinterbrandes nicht wieder geschlossen wurde. Ferner kalzinierte der Kalkstein, wobei das dabei entstehende, gasförmige CO₂ Porosität erzeugte. Die Partikel der mineralischen Rohstoffe versinterten während des Brandes miteinander.

Nach Durchführung des Sinterbrandes ließ man die Granalien abkühlen. Aanschließend lagen diese Granalien als ein erfindungsgemäßer Rohstoff vor. Insoweit lag dieser erfindungsgemäße Rohstoff in Form von Körnern aus miteinander versinterten Partikeln vor, wobei die Körner eine hohe offene Porosität aufwiesen, so dass der Rohstoff als Leichtrohstoff vorlag.

Die hohe offene Porosität hatte sich zum einen durch den Ausbrand des Holzstaubes und zum anderen durch die Kalzinierung des Kalksteins während des Sinterbrandes gebildet.

Der erhaltene Rohstoff wurde hinsichtlich seiner chemischen Zusammensetzung gemäß DIN EN ISO 12677:2013-02 analysiert. Danach wies der Rohstoff eine chemische Zusammensetzung auf, wonach die folgenden Oxide jeweils in den folgenden Anteilen im Rohstoff vorlagen, jeweils bezogen auf die Gesamtmasse der gemäß der chemischen Analyse bestimmten Substanzen:

| | |
|---|---|
| Al₂O₃: | 86,59 Masse-%, |
| MgO: | 5,36 Masse-%, |
| CaO: | 7,57 Masse-%, |
| SiO₂: | 0,13 Masse-%, |
| Fe₂O₃: | 0,13 Masse-%, |
| Na₂O: | 0,14 Masse-%, |
| Glühverlust: | 0,26 Masse-%. |

Die gemäß DIN 66133:1993-06 bestimmte offene Porosität des Rohstoffes betrug 34,6 Vol.-%.

Die Rohdichte des Rohstoffes wurde gemäß DIN EN 993-1:1995-04 mit 2,376g/cm³ bestimmt.

Das Schüttgewicht gemäß DIN EN ISO 60:2000-01 betrug 770 g/l.

Ferner wurde die Porengrößenverteilung in dem erhaltenen Rohstoff mittels Quecksilberdruckporosimetrie gemäß DIN 66133:1993-06 bestimmt. Danach lag der Wert d₉₀ für die Porengröße bei 48µm.

Schließlich wurden Art und Anteil der mineralogischen Phasen im Rohstoff mittels Röntgendiffraktometrie gemäß DIN EN 13925-1:2003-07 bestimmt. Danach konnten die folgenden Phasen in den folgenden Anteilen bestimmt werden, jeweils bezogen auf die Gesamtmasse des Rohstoffs:

| | |
|---|---|
| Ca₂Mg₂Al₂₈O₄₆: | 42 Masse-% |
| CaMg₂Al₁₆O₂₇: | 45 Masse-% |
| MgAl₂O₄ (Spinell): | 3 Masse-% |
| CaAl₄O₇ (Grossit): | 5 Masse-% |
| CaAl₁₂O₁₉ (Hibonit): | 5 Masse-% |

Ferner wurde die Feuerfestigkeit des Rohstoffes getestet, insbesondere seine Schwindung und Formstabilität bei hohen Temperaturen. Dabei konnte auch bei Temperaturen bis zu 1.700°C praktisch keine Schwindung und damit eine hohe Formstabilität des erhaltenen Rohstoffs festgestellt werden.

Unter Verwendung des gemäß diesem Ausführungsbeispiel erhaltenen Rohstoffs wurde ein feuerfestes Erzeugnis in Form eines feuerfesten Betons hergestellt. Hierzu wurden zunächst 55 Masse-% des gemäß dem Ausführungsbeispiel erhaltenen Rohstoffs, 25 Masse-% eines Calzium-Aluminat-Zementes und 20 Masse-% Tonerde (bestehend aus calcinierter Tonerde und Sintertonerde) unter Hinzugabe von Wasser miteinander zu einer Mischung gemischt. Die Angaben in Masse-% beziehen sich auf die Mischung ohne das Wasser.

Anschließend ließ man den Zement abbinden und brannte die abgebundene Mischung bei 1.650°C zu einem feuerfesten Erzeugnis in Form eines feuerfesten Betons.

Dieses Erzeugnis wies eine Dichte von nur 1,75 g/cm³, eine offene Porosität von 47 Volumen-% und hierdurch einen hohen Dämmwert auf. Trotz dieser geringen Dichte und hohen offenen Porosität wies das Erzeugnis nur eine lineare Schwindung von 2 % bei 1.700°C auf.

Der erhaltene Rohstoff eignet sich daher hervorragend zur Herstellung eines feuerfesten Erzeugnisses mit einem hohen Dämmwert und einer gleichzeitig hohen möglichen Anwendungstemperatur.

## Patentansprüche

1. Rohstoff zur Herstellung eines feuerfesten Erzeugnisses, umfassend die folgenden Merkmale:
1.1 der Rohstoff weist eine chemische Zusammensetzung auf, wonach die folgenden Oxide jeweils in den folgenden Anteilen vorliegen:
| | |
|---|---|
| Al₂O₃: | 83 bis 93 Masse-%; |
| MgO: | 4 bis 9 Masse-%; |
| CaO: | 2 bis 10 Masse-%; |
1.2 der Rohstoff weist eine offene Porosität im Bereich von 30 bis 60 Volumen-% auf.

2. Rohstoff nach Anspruch 1, der eine chemische Zusammensetzung aufweist, wonach die Oxide Al₂O₃, MgO und CaO in einem Gesamtanteil von wenigstens 98 Masse-% vorliegen, bezogen auf die Gesamtmasse der Substanzen der chemischen Zusammensetzung des Rohstoffs.

3. Rohstoff nach wenigstens einem der vorhergehenden Ansprüche, der eine chemische Zusammensetzung mit einem Anteil an SiO₂ unter 0,5 Masse-% aufweist.

4. Rohstoff nach wenigstens einem der vorhergehenden Ansprüche, der eine chemische Zusammensetzung mit einem Anteil an Fe₂O₃ unter 0,5 Masse-% aufweist.

5. Rohstoff nach wenigstens einem der vorhergehenden Ansprüche, der eine Rohdichte im Bereich von 1,60 bis 2,50 g/cm³ aufweist.

6. Rohstoff nach wenigstens einem der vorhergehenden Ansprüche, der ein Schüttgewicht im Bereich von 600 bis 1.000 g/l aufweist.

7. Rohstoff nach wenigstens einem der vorhergehenden Ansprüche, der eine Porengrößenverteilung aufweist, wonach wenigstens 90 Vol.-% des Porenvolumens der offenen Poren von Poren mit einer Porengröße unter 50 µm gebildet sind.

8. Rohstoff nach wenigstens einem der vorhergehenden Ansprüche, der die Phase Ca₂Mg₂Al₂₈O₄₆ aufweist.

9. Rohstoff nach wenigstens einem der vorhergehenden Ansprüche, der die Phase CaMg₂Al₁₆O₂₇ aufweist.

10. Rohstoff nach wenigstens einem der vorhergehenden Ansprüche, der die Phase MgAl₂O₄ in einem Anteil unter 8 Masse-% aufweist.

11. Verwendung eines Rohstoffs nach wenigstes einem der vorhergehenden Ansprüche zur Herstellung eines feuerfesten Erzeugnisses.

12. Feuerfestes Erzeugnis, welches einen Rohstoff nach wenigstens einem der Ansprüche 1 bis 10 umfasst.

13. Feuerfestes Erzeugnis nach Anspruch 12 in Form eines feuerfesten Betons.

14. Feuerfestes Erzeugnis nach wenigstens einem der Ansprüche 12 bis 13, welches einen Calzium-Aluminat-Zement und einen Rohstoff nach wenigstens einem der Ansprüche 1 bis 10 umfasst.

15. Feuerfestes Erzeugnis nach wenigstens einem der Ansprüche 12 bis 14, welches einen Rohstoff nach wenigstens einem der Ansprüche 1 bis 10 in einem Anteil im Bereich von 10 bis 90 Masse-% umfasst.

## Claims

1. A raw material for producing a refractory product, comprising the following features:
1.1 the raw material has a chemical composition according to which the following oxides are present in the following proportions:
| | |
|---|---|
| Al₂O₃: | 83 to 93 mass %, |
| MgO: | 4 to 9 mass %, |
| CaO: | 2 to 10 mass %; |
1.2 the raw material has an open porosity in the range of from 30 to 60 volume %.

2. The raw material according to claim 1, which has a chemical composition according to which the oxides Al₂O₃, MgO and CaO are present in a total proportion of at least 98 mass % in relation to the total mass of the substances of the chemical composition of the raw material.

3. The raw material according to at least one of the preceding claims, which has a chemical composition with a proportion of SiO₂ less than 0.5 mass %.

4. The raw material according to at least one of the preceding claims, which has a chemical composition with a proportion of Fe₂O₃ less than 0.5 mass.

5. The raw material according to at least one of the preceding claims, which has a raw density in the range of from 1.60 to 2.50 g/cm³.

6. The raw material according to at least one of the preceding claims, which has a bulk weight in the range of from 600 to 1,000 g/l.

7. The raw material according to at least one of the preceding claims, which has a pore size distribution on the basis of which at least 90 vol. % of the pore volume of the open pores are formed by pores with a pore size less than 50 µm.

8. The raw material according to at least one of the preceding claims, which comprises the phase Ca₂Mg₂Al₂₈O₄₆.

9. The raw material according to at least one of the preceding claims, which comprises the phase CaMg₂Al₁₆O₂₇.

10. The raw material according to at least one of the preceding claims, which comprises the phase MgAl₂O₄ in a proportion less than 8 mass %.

11. Use of a raw material according to at least one of the preceding claims for producing a refractory product.

12. A refractory product which comprises a raw material according to at least one of claims 1- 10.

13. The refractory product according to claim 12 in the form of a refractory concrete.

14. The refractory product according to at least one of claims 12 - 13, which comprises a calcium-aluminate cement and a raw material according to at least one of the preceding claims.

15. The refractory product according to at least one of claims 12 - 14, which comprises a raw material according to at least one of the preceding claims in a proportion in the range of from 10 to 90 mass %.

## Revendications

1. Matière première, destinée à la fabrication d'un produit réfractaire, comprenant les caractéristiques suivantes :
1.1 la matière première présente une composition chimique selon laquelle les oxydes suivants se présentant respectivement dans les proportions suivantes :
| | |
|---|---|
| Al₂O₃ : | 83 à 93 % en masse ; |
| MgO : | 4 à 9 % en masse ; |
| CaO : | 2 à 10 % en masse ; |
1.2 la matière première présente une porosité ouverte de l'ordre de 30 à 60 % en volume.

2. Matière première selon la revendication 1, qui présente une composition chimique selon laquelle les oxydes Al₂O₃, MgO et CaO se présentent dans une proportion totale d'au moins 98 % en masse, rapportée à la masse totale des substances de la composition chimique de la matière première.

3. Matière première selon au moins l'une quelconque des revendications précédentes, qui présente une composition chimique avec une proportion de SiO₂ inférieure à 0,5 % en masse.

4. Matière première selon au moins l'une quelconque des revendications précédentes, qui présente une composition chimique avec une proportion de Fe₂O₃ inférieure à 0,5 % en masse.

5. Matière première selon au moins l'une quelconque des revendications précédentes, qui présente une masse volumique apparente de l'ordre de 1,60 à 2,50 g /cm³.

6. Matière première selon au moins l'une quelconque des revendications précédentes, qui présente une densité en vrac de l'ordre de 600 à 1.000 g/l.

7. Matière première selon au moins l'une quelconque des revendications précédentes, qui présente une distribution de la taille des pores selon laquelle au moins 90 % en volume du volume de pore des pores ouverts sont formés par des pores d'une taille de pores inférieure à 50 µm.

8. Matière première selon au moins l'une quelconque des revendications précédentes, qui présente la phase Ca₂Mg₂Al₂₈O₄₆.

9. Matière première selon au moins l'une quelconque des revendications précédentes, qui présente la phase CaMg₂Al₁₆O₂₇.

10. Matière première selon au moins l'une quelconque des revendications précédentes, qui présente la phase MgAl₂O₄ dans une proportion inférieure à 8 % en masse.

11. Utilisation d'une matière première selon au moins l'une quelconque des revendications précédentes pour la fabrication d'un produit réfractaire.

12. Produit réfractaire, lequel comprend une matière première selon au moins l'une quelconque des revendications 1 à 10.

13. Produit réfractaire selon la revendication 12, sous la forme d'un béton réfractaire.

14. Produit réfractaire selon au moins l'une quelconque des revendications 12 à 13, lequel comprend un ciment de calcium-aluminate et une matière première selon au moins l'une quelconque des revendications 1 à 10.

15. Produit réfractaire selon au moins l'une quelconque des revendications 12 à 14, lequel comprend une matière première selon au moins l'une quelconque des revendications 1 à 10 dans une proportion de l'ordre de 10 à 90 % en masse.
